# DEMANDE DE BREVET EUROPEEN

(11) **EP 2 023 469 A2**
(43) Date de publication de la demande: **11.02.2009**
(21) Numéro de dépôt: 08161672.4
(22) Date de dépôt: 01.08.2008
(51) Int. Cl.: H02K 21/16, H02K 1/14

(54) **Générateur électrique et installation comportant une tour d'éclairage alimentée par un tel générateur**

(30) Priorité: 06.08.2007 FR 0756955
(71) Demandeur: MOTEURS LEROY-SOMER, 16000 Angouleme (FR)
(72) Inventeur: Czajkowski, François, 16730 Linars (FR); Saint Michel, Jacques, 16000 Angoulême (FR); Manfe, Philippe, 16730 Linars (FR); Kharrat, Hédi, 16470 Saint Michel (FR); Rebard, Michel, 16730 Fleac (FR); Moreau, Luc, 16000 Angoulême (FR)
(74) Mandataire: Tanty, François

(57) **Abrégé**

La présente invention concerne un générateur électrique pour tour d'éclairage comportant une pluralité de lampes à décharge, chaque lampe ayant une puissance supérieure à 750 W, ce générateur étant agencé pour être entraîné par un moteur thermique, le générateur étant multiphasé à *n* phases, avec *n* nombre entier pair, chaque phase étant indépendante dans un circuit magnétique commun à toutes les phases et destinée à alimenter une lampe, le générateur comportant un rotor à aimants permanents à 3 *n* pôles et un stator concentrique au rotor, soumis au flux magnétique radial des aimants, le stator comportant un empilage de tôles en fer silicium avec un taux en silicium supérieur à 0.5% et d'épaisseur individuelle supérieure à 0.35 mm, définissant 4 *n* dents du circuit magnétique dont une sur deux porte un bobinage (8ᵢ).

## Description

La présente invention concerne un générateur électrique destiné à alimenter une tour d'éclairage.

Un tel générateur est habituellement entraîné par un moteur thermique.

Une tour d'éclairage comporte de façon conventionnelle une pluralité de lampes à décharge, le plus souvent quatre, qui nécessitent pour leur amorçage une tension relativement élevée.

Le rendement lumineux de ces lampes dépend de la fréquence d'alimentation électrique, tendant à augmenter avec la fréquence.

Dans des installations connues, l'alimentation des lampes s'effectue à l'aide de ballasts qui produisent la haute tension d'amorçage des lampes. La présence de ces ballasts accroît le coût de l'installation.

US 2004/0245879 divulgue un générateur à flux axial ayant un rotor disque de polarité élevée. Le stator est réalisé avec une matière magnétique à faibles pertes, relativement coûteuse. De plus, le rotor doit être positionné précisément dans le sens axial par rapport au stator, car le jeu axial détermine l'entrefer. Cela nécessite de prévoir un roulement servant de butée axiale sur le moteur thermique ou le générateur, ce qui peut en accroître le coût.

Il existe un besoin pour bénéficier, à un coût réduit, d'une installation comportant une tour d'éclairage tout en ayant un rendement lumineux satisfaisant.

L'invention vise à répondre à ce besoin.

L'invention a pour objet un générateur électrique pour tour d'éclairage comportant une pluralité de lampes à décharge, chaque lampe ayant une puissance supérieure à 750 W, ce générateur étant agencé pour être entraîné par un moteur thermique, le générateur étant multiphasé à *n* phases, avec *n* nombre entier pair, chaque phase étant indépendante dans un circuit magnétique commun à toutes les phases et destinée à alimenter une lampe, le générateur comportant un rotor à aimants permanents à 3 *n* pôles et un stator concentrique au rotor, soumis au flux magnétique radial des aimants, le stator comportant un empilage de tôles en fer silicium avec un taux en silicium supérieur à 0.5 % et d'épaisseur individuelle supérieure à 0.35 mm, définissant 4 *n* dents du circuit magnétique dont une sur deux porte un bobinage.

Les caractéristiques ci-dessus permettent de générer une tension suffisamment élevée d'amorçage des lampes, ce qui permet de supprimer les ballasts, donc de réduire le coût de l'installation.

De plus, le flux radial rend le positionnement axial du rotor relativement au stator moins critique, ce qui permet de réaliser le générateur avec un seul palier, si cela est souhaité, ce qui peut en simplifier la construction.

La polarité du générateur, notamment dans le cas où *n* est égal à 4, offre à la fois une fréquence électrique suffisamment élevée pour obtenir un rendement lumineux satisfaisant et des pertes magnétiques suffisamment faibles pour permettre l'utilisation de tôles conventionnelles en fer silicium, relativement peu coûteuses. De plus, une telle polarité peut simplifier la fabrication de la machine.

Le générateur comporte, dans un exemple de mise en oeuvre, un unique palier supportant l'arbre du rotor.

L'inductance par phase peut être supérieure ou égale à 50 mH, étant par exemple comprise entre 60 et 80 mH.

Les tôles du stator peuvent être celles commercialisées sous la référence M270 50A (selon la norme CEI 404-8-4), par exemple.

L'impédance par phase peut être supérieure à 78 Ω et permettre d'obtenir une tension à vide supérieure à 710 V crêtes et une tension en charge inférieure à 270 V efficaces.

Les aimants peuvent être disposés en surface.

Le générateur peut comporter plusieurs machines identiques sur le même arbre. Le générateur peut encore comporter des machines différentes sur le même arbre. Par « machine » il faut comprendre un ensemble stator et rotor interagissant pour produire de l'électricité.

L'invention a encore pour objet une installation comportant une tour d'éclairage comportant plusieurs lampes à décharge et un générateur électrique tel que défini ci-dessus, les lampes étant alimentées sans ballasts.

Cette installation peut également comporter un moteur thermique pour entraîner le générateur électrique, le moteur thermique étant par exemple agencé pour tourner à 2500 tours par minute ± 30 %.

L'invention pourra être mieux comprise à la lecture de la description qui va suivre, d'un exemple de mise en oeuvre non limitatif de celle-ci, et à l'examen du dessin annexé, sur lequel :
- la figure 1 est une coupe transversale schématique d'un exemple de générateur réalisé conformément à l'invention,
- la figure 2 représente isolément une tôle du stator,
- la figure 3 est une coupe axiale schématique du générateur de la figure 1,
- la figure 4 est un schéma électrique d'une phase du générateur reliée à une lampe à décharge de la tour d'éclairage.

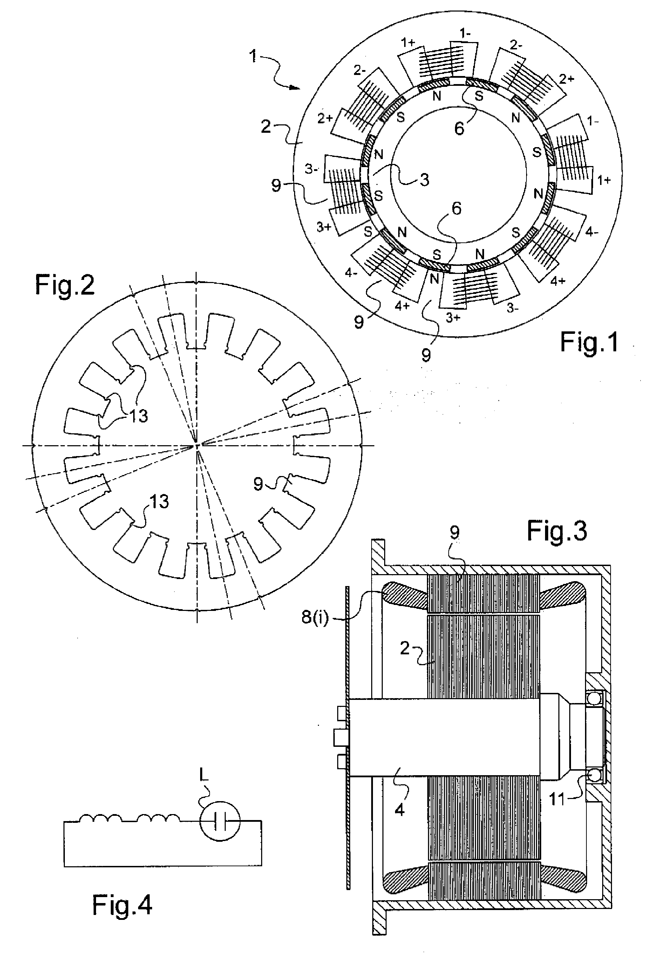

Le générateur électrique 1 illustré aux figures 1 à 3 comporte un stator 2 et un rotor intérieur 3 concentrique au stator.

Le diamètre extérieur du générateur est par exemple voisin de 305 mm et sa longueur voisine de 155 mm, l'invention n'étant bien entendu pas limitée à des dimensions particulières.

Comme on peut le voir sur la figure 3, le rotor 2 comporte un arbre 4 qui peut être accouplé à un arbre de sortie d'un moteur thermique, non représenté. Cet arbre 4 peut être supporté par un unique roulement à billes 11 du générateur 1.

Dans l'exemple considéré, le rotor comporte des aimants 6 en surface, au nombre de douze, de polarités alternant dans le sens circonférentiel.

Les aimants 6 sont par exemple collés sur l'arbre, une frette pouvant les recouvrir, le cas échéant.

Les aimants 6 sont par exemple à base de néodyme, fer et bore et génèrent un flux radial vers le stator. Ce dernier comporte seize dents 9 dépourvues d'épanouissements polaires qui sont bobinées une dent sur deux. Les dents 9 peuvent comporter des encoches 13 pour le montage de cales de retenue des bobinages 8(ᵢ), non représentées.

Le stator 2 comporte un empilage de tôles en fer silicium, par exemple de référence M270 50A, d'épaisseur individuelle supérieure à 0,35 mm, de taux de silicium supérieur à 0,5 %.

Les bobinages 8(₁) ... 8(₄) peuvent être réalisés avant leur montage sur les dents 9. Chaque bobinage 8(₁) ... 8(₄) comporte par exemple environ 300 spires par dent.

Chaque phase du générateur comporte deux bobinages reliés électriquement en série et séparés par trois dents 9, comme illustré à la figure 1.

Les bobinages sont, pour chaque phase, reliés électriquement en série comme illustré à la figure 4, de façon à alimenter une lampe à décharge L correspondante de la tour d'éclairage.

Les lampes utilisées sont des lampes halogènes, de puissance supérieure à 750 W, par exemple voisine de 1000 W.

A titre d'exemple de telles lampes, on peut citer celles commercialisées par la société GTE sous la référence SYLVANIA SUPER METALARC VERTICAL MS 1000/BU.

Le moteur thermique est par exemple un groupe diesel agencé pour entraîner le générateur à une vitesse de rotation de 2500 tours/min.

Lorsque le générateur est entraîné à une telle vitesse, la fréquence électrique f est de l'ordre de 250 hertz, selon la formule *f_{électrique}*=(nombre de paires de pôles)*(vitesse de rotation en tr/min)/60].

A une telle fréquence, les lampes à décharge conservent un rendement satisfaisant.

L'impédance par phase du générateur est, dans l'exemple considéré, voisine de 110 Ω.

Avec une telle impédance, la tension à vide atteint par exemple environ 450 V efficaces et plus de 710 V crêtes et la tension en charge 250 V efficaces environ et plus de 300 V crêtes.

Cela permet d'amorcer les lampes L sans utiliser de ballast.

Les *n* phases de la machine sont indépendantes magnétiquement dans le même circuit magnétique. La tension à vide d'une phase ne dépend pas ou peu de l'état des autres phases (chargé ou à vide). Il est aussi possible d'allumer les lampes successivement ou simultanément.

Bien entendu, l'invention n'est pas limitée à l'exemple décrit.

On peut notamment modifier la vitesse d'entraînement du générateur.

L'expression *« comportant un* » doit se comprendre comme étant synonyme de « *comportant au moins un* ».

## Revendications

1. Générateur électrique (1) pour tour d'éclairage comportant une pluralité de lampes à décharge (L), chaque lampe ayant une puissance supérieure à 750 W, ce générateur étant agencé pour être entraîné par un moteur thermique, le générateur étant multiphasé à *n* phases, avec *n* nombre entier pair, chaque phase étant indépendante dans un circuit magnétique commun à toutes les phases et destinée à alimenter une lampe, le générateur comportant un rotor à aimants permanents à 3 *n* pôles et un stator concentrique au rotor, soumis au flux magnétique radial des aimants, le stator comportant un empilage de tôles en fer silicium avec un taux en silicium supérieur à 0.5% et d'épaisseur individuelle supérieure à 0.35 mm, définissant 4 *n* dents du circuit magnétique dont une sur deux porte un bobinage (8ᵢ).

2. Générateur selon la revendication 1, comportant un seul palier supportant l'arbre.

3. Générateur selon l'une des revendications précédentes, les tôles étant celles commercialisées sous la référence M270 50A (selon la norme CEI 404-8-4).

4. Générateur selon l'une des revendications 1 et 2, l'impédance par phase étant supérieure à 78 Ω et permettant d'obtenir une tension à vide supérieure à 710V crêtes et une tension en charge inférieure à 270 V efficaces.

5. Générateur selon l'une quelconque des revendications précédentes, étant agencé pour être entrainé à 2500 tours par minute ±30 %.

6. Générateur selon l'une quelconque des revendications précédentes, comportant plusieurs machines sur le même arbre.

7. Générateur selon l'une quelconque des revendications 1 à 6, les aimants (6) étant disposés en surface.

8. Générateur selon l'une quelconque des revendications précédentes, comportant quatre phases.

9. Installation comportant une tour d'éclairage comportant plusieurs lampes à décharge et un générateur électrique tel que défini dans l'une quelconque des revendications 1 à 8, les lampes étant alimentées sans ballasts.

10. Installation selon la revendication 9, comportant un moteur thermique pour entraîner le générateur électrique.
